Europäisches Patentamt

European Patent Office

Office européen des brevets

(19)

(11) Publication number: **0 025 675**
**B1**

(12) **EUROPEAN PATENT SPECIFICATION**

(45) Date of publication of patent specification: **28.12.83**

(51) Int. Cl.³: **H 04 L 7/02, H 04 L 25/03**

(21) Application number: **80303116.0**

(22) Date of filing: **05.09.80**

(54) Arrangements for data timing recovery from distorted signals for use in adaptive modems with multi-level coding.

(30) Priority: **14.09.79 GB 7931952**

(43) Date of publication of application:
**25.03.81 Bulletin 81/12**

(45) Publication of the grant of the patent:
**28.12.83 Bulletin 83/52**

(84) Designated Contracting States:
**AT BE CH DE FR IT LI LU NL SE**

(56) References cited:
**DE - A - 2 651 043**
**DE - A - 2 853 058**
**US - A - 4 089 061**
**US - A - 4 130 724**

(73) Proprietor: **PLESSEY OVERSEAS LIMITED**
**Vicarage Lane**
**Ilford Essex IGI 4AQ (GB)**

(72) Inventor: **Galpin, Robert Keith Portway**
**J.W.Frisolaan 43**
**2252 HD Voorschoten (NL)**

(74) Representative: **Hart, Robert John**
**Plessey Telecommunications Limited Edge Lane**
**Liverpool L7 9NW (GB)**

Courier Press, Leamington Spa, England.

# Arrangements for data timing recovery from distorted signals for use in adaptive modems with multi-level coding

The present invention relates to an arrangement for recovering the data symbol timing from the received signal in a data transmission system.

Various methods are in common use for example pilot tones can be used or the envelope modulation caused by multiple spectral components in the signal; but in narrow-bandwidth systems, timing is derived from the demodulated data signal by inspecting the zero-crossing or threshold-crossing instants, or by producing a timing signal by squaring a narrow band of data components in the region of the so-called "Nyquist frequency" (which is equal to half the data symbol frequency). For the satisfactory operation of either of these latter methods the data message has to be "scrambled" or encoded to produce an adequate number of threshold crossings and an approximately even spectral distribution of energy when adverse patterns, such as continuous mark or space, are required to be transmitted.

When the use of multi-level coding with adaptive equalization is considered, satisfactory demodulation and decoding of data is possible from signals so badly distorted that threshold crossings appear to occur uniformly throughout the symbol period. However, in these conditions, timing derived from threshold crossings is meaningless. At the same time, delay distortion across the signal spectrum means that timing derived from the "Nyquist" frequency components, while correct in frequency, may be far removed in phase from the optimum position. The problem is, therefore, to derive timing which is near the optimum position from a severely distorted signal to allow the adaptive equalizer to perform its function efficiently.

The invention makes use of the fact that where an adaptive equalizer is incorporated in a modem, some sort of training sequence is employed prior to the transmission of the data message. This training sequence usually incorporates a block of pseudo-random data transmitted at the basic symbol rate (i.e. binary instead of the usual multi-level encode) to provide the equalizer with a relatively less distorted signal to operate on. This signal is also far more suitable for obtaining threshold-derived timing satisfactorily than is the corresponding multi-level signal.

The essence of the invention is that, during this training period, both threshold-derived timing and Nyquist-derived timing are produced. The Nyquist-derived timing is then phase-shifted to correspond to the threshold-derived timing, which is valid during this period. This phase shift is then fixed (for as long as required) so that, when multi-level coding is subsequently introduced (which may render the threshold-derived timing meaningless) valid timing is still obtained from the Nyquist-derived timing signal (which is independent of the form of coding so long as the signal is effectively scrambled). Further advantage of this invention is that valid timing can be recovered directly from the received demodulated signal when it has been restored following a break in transmission, without the need for a training sequence from the transmitter.

The invention provides for the use of an independent threshold-crossing timing recovery system to adjust, during a training period, the phase of a "Nyquist" timing recovery system to the optimum position for the operation of a decision-feedback equalizer so that, when multi-level transmission is in progress and threshold-crossing timing recovery is impossible, the correct timing at the optimum phase can be maintained from the Nyquist-derived timing.

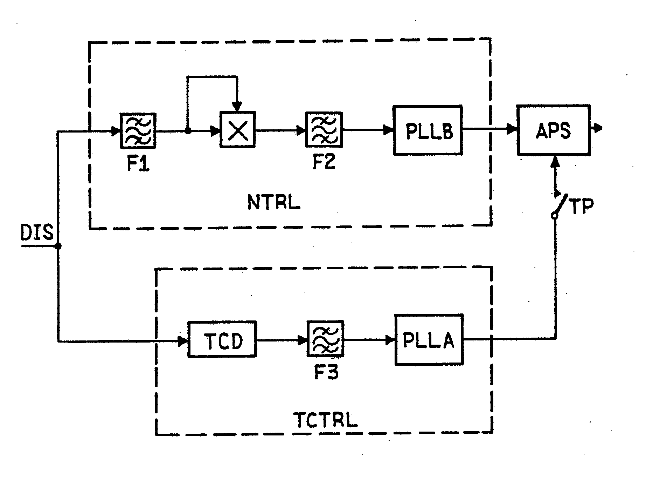

By way of an example, a possible implementation of the invention is shown in the drawing.

The demodulated data signal DIS is applied to the threshold detector TCD, the output of which is filtered in F3 a narrow bandpass filter tuned to the symbol timing frequency $f_s$. The filtered signal is fed to the phase lock loop 'A' PLLA which substantially reduces the jitter. The output of this phase lock loop is used as a phase reference during the training period (i.e. while contacts TP are closed). The demodulated data signal is also filtered in F1, which is a bandpass filter designed to provide, in conjunction with the modem filtering, a narrow pass band symetrical about the "Nyquist" frequency of $f_{s/2}$. The output of this filter is squared in the multiplier X and filtered by $F_2$, which can be substantially identical to $F_3$. This signal is fed to a second phase lock loop 'B' PLLB to reduce jitter, and then phase shifted in the adjustable phase shifter APS. The phase shift is adjusted during the training period until the output symbol timing is in phase with the threshold-derived timing. This phase shift is then fixed under the control of the Nyquist timing recovery system NTRL. The phase of APS remains set until a new training sequence occurs when the contacts TP are again closed to allow the threshold crossing timing recovery loop TCTRL to control the setting of the adjustable phase shifter APS.

The threshold-crossing timing recovery loop TCTRL includes the threshold-crossing detector TCD which is arranged to produce an output signal each time the input signal passes through zero as long as the signal level has exceeded a preset threshold level in the previous half cycle. In the case of the training period the information transmitted conforms to a regular pattern allowing the timing to be validly recovered by this loop TCTRL.

## Claims

1. Data symbol timing recovery arrangement for use in a data modem incorporating adaptive equilizers, the arrangement comprising a Nyquist timing recovery means (NTRL) and a threshold crossing timing recovery means (TCTRL) characterised in that the Nyquist timing recovery means (NTRL) generates timing signals by way of an adjustable phase shifting means (APS) which is set to a predetermined state of adjustment by the threshold crossing timing recovery means (TCTRL) which is active only during the training phase of the operation of a data transmission system incorporating the modem.

2. Data symbol timing memory arrangement according to claim 1 in which the Nyquist timing recovery means (NTRL) includes a first band pass filter (F1) arranged to pass the Nyquist frequencies, a multiplier (X) arranged to square the output signals generated by the first band pass filter (F1), a second bandpass filter (F2) and a phase lock loop circuit (PLLB).

3. Data symbol timing recovery arrangement according to claim 2 in which the threshold crossing timing recovery means (TCTRL) includes a threshold crossing detector (TCD) arranged to produce an output signal each time the input signal passes through zero in those half cycles in which the input signal exceeds the threshold level.

## Patentansprüche

1. Schaltung zur Rückgewinnung der Steuersignale von Datensymbolen zur Verwendung in einem Daten-Modem mit adaptiven Entzerrern, wobei die Schaltung aus einer Nyquist Steuersignal-Rückgewinnungsschaltung (NTRL) und einer Schwellenübergang-Steuersignal-Rückgewinnungsschaltung (TCTRL) besteht, dadurch gekennzeichnet, daß die Nyquist Steuersignal-Rückgewinnungsschaltung (NTRL) Taktsignale erzeugt mittels einer einstellbaren Phasenverschiebung (APS), die von dem Schwellenübergang - Steuersignal - Rück - gewinnungsschaltung (TCTRL) auf einen bestimmten Einstellzustand eingestellt wird, wobei das TCTRL nur während der Einarbeitungsphase des Datenübertragungssystems, an das das Modem angeschlossen ist, wirksam ist.

2. Schaltung zur Rückgewinnung der Steuersignale von Datensymbolen entsprechend Anspruch 1, in der die Nyquist Steuersignal-Rückgewinnungsschaltung (NTRL) aus einem ersten Bandpaßfilter (F1), welcher die Nyquist Frequenzen durchläßt, einem Multiplier (X), der die vom ersten Bandpaßfilter (F1) erzeugten Signale in Rechteckimpulse umwandelt, einem zweiten Bandpaßfilter (F2) und einem Phase Lock Loop Kreis (PLLB) besteht.

3. Schaltung zur Rückgewinnung der Steuersignale von Datensymbolen entsprechend Anspruch 2, in welcher die Schwellenübergang - Steuersignal - Rückgewinnungsschaltung (TCTRL) einen Schwellenübergang-Detektorkreis (TCD) enthält, welcher so ausgelegt ist, daß er jedesmal ein Ausgangssignal erzeugt wenn das Eingangssignal in jenen Halbwellen durch Null geht, in denen das Eingangssignal über dem Schwellenwert liegt.

## Revendications

1. Disposition de rétablissement de synchronisation de symboles de données en vue d'adapation dans un modem de données qui comprend des égaliseurs d'adaptation; la disposition comprend un moyen de rétablissement de synchronisation Nyquist (NTRL) et un moyen de rétablissement de synchronisation de croisement de seuil (TCTRL) et elle est caractérisée par le fait que le moyen de rétablissement de synchronisation Nyquist (NTRL) produit des signaux de synchronisation par un moyen de déphasage réglable (APS), qui est réglé à un état prédéterminé de réglage par le moyen de rétablissement de synchronisation de croisement de seuil (TCTRL), qui est uniquement actif pendant la phase de formation du fonctionnement d'un système de transmission de données comprenant le modem.

2. Disposition de mémoire de synchronisation de symboles de données selon la revendication 1 où le moyen de rétablissement de synchronisation Nyquist (NTRL) comprend un premier filtre passe-bande (F1) disposé pour faire passer les fréquences Nyquist, un multiplicateur (X) disposé pour mettre au carré les signaux de sortie produits par le premier filtre passe-bande (F1), un deuxième filtre passe-bande (F2) et un circuit de boucle de verrouillage de phase (PLLB).

3. Disposition de rétablissement de synchronisation de symboles de données selon la revendication 2 où le moyen de rétablissement de synchronisation de croisement de seuil (TCTRL) comprend un détecteur de croisement de seuil (TCD) disposé pour produire un signal de sortie chaque fois que le signal d'entrée passe par le zéro dans les demi-cycles où le signal d'entrée dépasse le niveau de seuil.